# EUROPEAN PATENT APPLICATION

(11) **EP 4 412 028 A1**
(43) Date of publication of application: **07.08.2024**
(21) Application number: 23179472.8
(22) Date of filing: 15.06.2023
(51) Int. Cl.: H02J 7/00

(54) **METHOD AND DEVICE FOR IMPLEMENTING INTELLIGENT SELF-MANAGEMENT OF BATTERY GROUP AND BATTERY GROUP**

(30) Priority: 06.02.2023 CN 202310067440
(71) Applicant: CALB Technology (Shenzhen) Co. Ltd., Futian District, Shenzhen Guangdong 518000 (CN); CALB Group Co., Ltd., Changzhou City, Jiangsu Province (CN)
(72) Inventor: JIANG, Shukang, Changzhou City, Jiangsu Province (CN); CHEN, Jing, Changzhou City, Jiangsu Province (CN); FANG, Weifeng, Changzhou City, Jiangsu Province (CN)
(74) Representative: Becker, Eberhard

(57) **Abstract**

A method and device for implementing intelligent self-management of a battery group and a battery group. The method is applied in a self-management implementation system, which at least includes a cell parameter collection module (301) and a data analyzing and processing module (302). Each battery in the battery group is provided with the cell parameter collection module (301). The method includes the following steps. The cell parameter collection module (301) collects a current state signal of a target battery corresponding to an arrangement position thereof and provides the current state signal to the data analyzing and processing module (302) (101, 202). The data analyzing and processing module (302) performs a data conversion operation on the current state signal after receiving the current state signal to obtain a current state value of the battery (102, 203) and performs a matching self-management operation according to the current state value (103, 204).

## Description

### BACKGROUND

### Technical Field

The disclosure relates to the technical field of intelligent batteries, and in particular, relates to a method and device for implementing intelligent self-management of a battery group and a battery group.

### Description of Related Art

At present, the intelligent management of a battery group is implemented mainly through the battery management system (BMS). To be specific, the BMS needs to receive the sensing signals collected by the sensors at each sensor position, process the received sensing signals to obtain the state values of the batteries in the battery group, and then implement the intelligent management of the batteries according to the state values of the batteries.

However, it has been found in practice that only some of the batteries in the current battery group are provided with sensors on their surfaces, for example, every two batteries in the battery group are provided with sensors for collecting resistance values. As a result, the sensing signals received by the BMS do not cover all the batteries, and accurate management of the batteries thus cannot be implemented.

It can be seen that it is particularly important to provide a new method for managing batteries intelligently to improve the management accuracy of the batteries.

### SUMMARY

The disclosure provides a method and device for implementing intelligent self-management of a battery group and a battery group capable of collecting a state signal of each battery through a cell parameter collection module arranged in each battery in the battery group, so that the batteries in the battery group are accurately managed.

To solve the above technical problems, the first aspect of the disclosure provides a method for implementing intelligent self-management of a battery group. The method is applied in a self-management implementation system, and the self-management implementation system at least includes a cell parameter collection module and a data analyzing and processing module. Each battery in the battery group is provided with the cell parameter acquisition module, and the method includes the following steps.

The cell parameter collection module collects a current state signal of a target battery and provides the current state signal to the data analyzing and processing module.

The data analyzing and processing module performs a data conversion operation on the current state signal after receiving the current state signal to obtain a current state value of the target battery and performs a matching self-management operation according to the current state value.

The second aspect of the disclosure provides a device for implementing intelligent self-management of a battery group. The device is applied in a self-management implementation system, and the self-management implementation system at least includes a cell parameter collection module and a data analyzing and processing module. Further, each battery in the battery group is provided with the cell parameter collection module.

Herein, the self-management implementation system is configured to perform part or all of the steps in the method for implementing intelligent self-management of the battery group in the first aspect.

The third aspect of the disclosure provides a battery group. The battery group includes a plurality of batteries. Each battery in the battery group is provided with the cell parameter collection module, and the battery group is configured to perform part or all of the steps in the method for implementing intelligent self-management of the battery group in the first aspect.

The fourth aspect of the disclosure provides a device for implementing intelligent self-management of a battery group. The device is applied in a self-management implementation system, and the self-management implementation system at least includes a cell parameter collection module and a data analyzing and processing module. Further, each battery in the battery group is provided with the cell parameter collection module. Herein, the data analyzing and processing module includes:
a memory storing an executable program code; and
a processor coupled to the memory.

The processor calls the executable program code stored in the memory and performs part or all of the steps performed by the data analyzing and processing module provided in the method for implementing intelligent self-management of the battery group in the first aspect.

The fifth aspect of the disclosure provides a computer storage medium. The computer storage medium stores a computer command. The computer command is configured to perform part or all of the steps in the method for implementing intelligent self-management of the battery group in the first aspect when being called.

Compared to the related art, the beneficial effects of the disclosure include the following.

In the disclosure, the cell parameter collection module is disposed inside each battery in the corresponding battery group, and the state signal of each battery is collected through the cell parameter collection module in each battery. The collected state signal is provided to the data analyzing and processing module, so that the data analyzing and processing module can accurately judge the state of the battery according to the state signal collected by the cell parameter collection module disposed inside the battery and can further manage the battery in the battery group accurately. In this way, the accuracy of battery management is improved, and while the accuracy of battery management is improved, the efficiency of battery management can also be improved.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely some embodiments of the disclosure, and for a person having ordinary skill in the art, other drawings can be obtained based on these drawings without inventive effort.
FIG. 1 is a schematic diagram of a logic for implementing battery management.
FIG. 2 is a schematic flow chart of a method for implementing intelligent self-management of a battery group according to an embodiment of the disclosure.
FIG. 3 is a schematic flow chart of a method for implementing intelligent self-management of a battery group according to another embodiment of the disclosure.
FIG. 4 is a schematic diagram of an application architecture of a self-management implementation system according to an embodiment of the disclosure.
FIG. 5 is a schematic diagram of another application architecture of a self-management implementation system according to an embodiment of the disclosure.
FIG. 6 is a schematic diagram of a logic for implementing battery management according to an embodiment of the disclosure.
FIG. 7 is a schematic diagram of another logic for implementing battery management according to an embodiment of the disclosure.
FIG. 8 is a schematic diagram of a management flow for implementing self-management based on the logic for implementation shown in FIG. 6 according to an embodiment of the disclosure.
FIG. 9 is a schematic diagram of a management flow for implementing self-management based on the logic for implementation shown in FIG. 7 according to an embodiment of the disclosure.
FIG. 10 is a schematic diagram of collaboration of a battery cluster in the battery group according to an embodiment of the disclosure.
FIG. 11 is a schematic structural diagram of a manually movable conductive strip according to an embodiment of disclosure.
FIG. 12 is a schematic structural diagram of a self-propelled movable conductive strip according to an embodiment of disclosure.

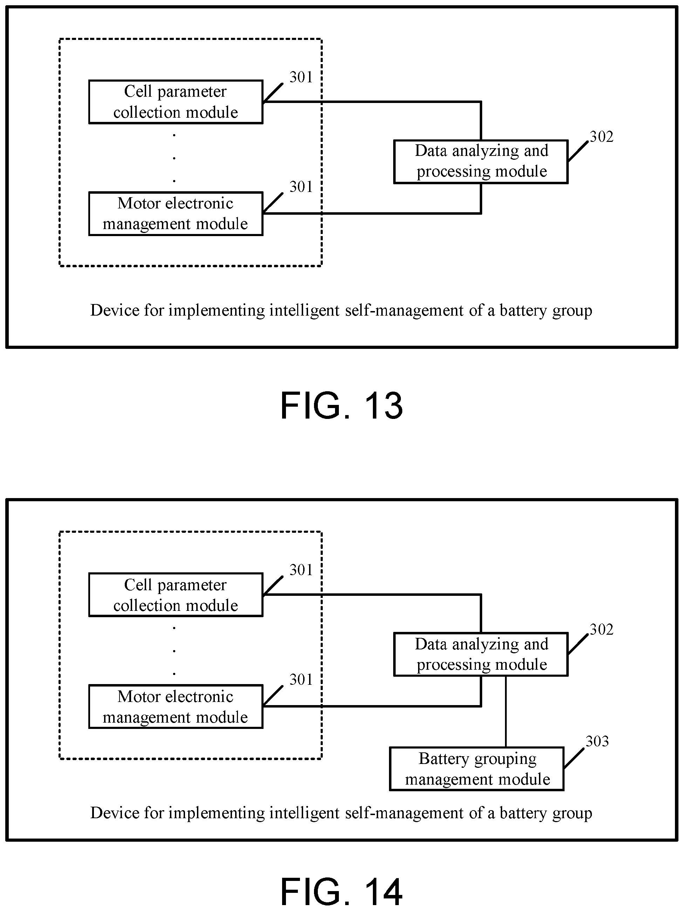

FIG. 13 is a schematic structural diagram of a device for implementing intelligent self-management of a battery group according to an embodiment of the disclosure.
FIG. 14 is a schematic structural diagram of another device for implementing intelligent self-management of a battery group according to an embodiment of the disclosure.

### DESCRIPTION OF THE EMBODIMENTS

In order to enable a person having ordinary skill in the art to better understand the solutions of the disclosure, the technical solutions in the embodiments of the disclosure will be clearly and completely described below together with the accompanying figures of the embodiments in the disclosure. Apparently, the described embodiments are only some of the embodiments of the disclosure, not all of the embodiments. Based on the embodiments of the disclosure, all other embodiments obtained by a person having ordinary skill in the art without making any inventive effort fall within the scope that the disclosure seeks to protect.

In the disclosure, the terms "first", "second", etc. in the specification, claims, and accompanying figures are used to distinguish different objects and are not necessarily to describe a specific order. Furthermore, the terms "comprising" and "having", as well as any variations thereof, are intended to cover a non-exclusive inclusion. For instance, a process, method, device, a product, or a terminal including a series of steps or units is not limited to the listed steps or units but optionally includes the steps or units not listed, or optionally includes other steps or units inherent to the process, method, product, or terminal.

Reference herein to an "embodiment" means that a particular feature, structure, or characteristic described in connection with the embodiment can be included in at least one embodiment of the disclosure. The occurrences of the word in various places in the specification are not necessarily all referring to the same embodiment, nor are independent or alternative embodiments mutually exclusive of other embodiments. It is understood explicitly and implicitly by a person having ordinary skill in the art that the embodiments described herein can be combined with other embodiments.

The disclosure provides a method and device for implementing intelligent self-management of a battery group and a battery group. Each battery in the battery group is provided with a cell parameter collection module. A state signal of each battery is collected through the cell parameter collection module in each battery. The collected state signal is provided to the data analyzing and processing module, so that the data analyzing and processing module can accurately judge the state of the battery according to the state signal collected by the cell parameter collection module disposed inside the battery and can further manage the battery in the battery group accurately. In this way, the accuracy of battery management is improved, and while the accuracy of battery management is improved, the efficiency of battery management can also be improved. Detail description is provided as follows.

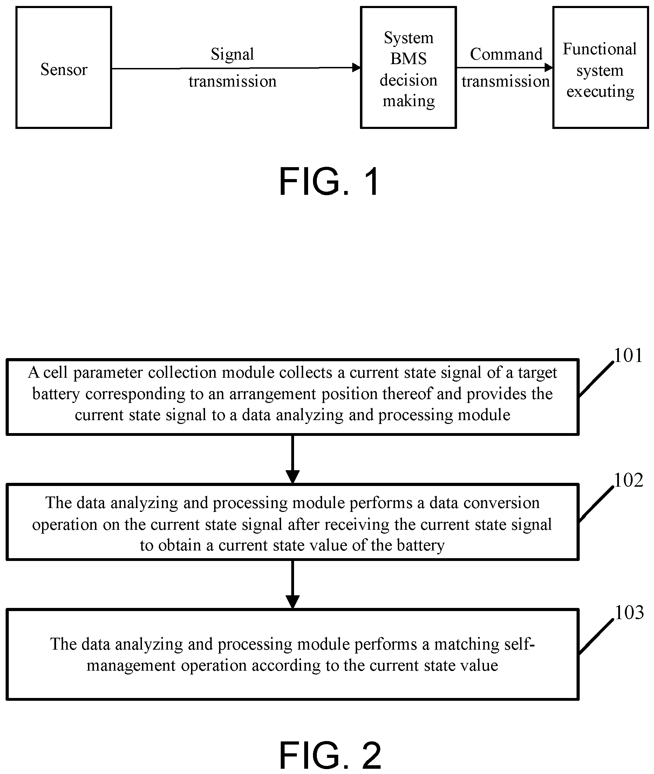

Before the method and device for implementing intelligent self-management of the battery group and the battery group provided by the disclosure are described in detail, a logic for implementing battery management disclosed in the prior art is described first. For details, specific reference may be made to FIG. 1, FIG. 1 is a schematic diagram of a logic for implementing battery management disclosed in the prior art. As shown in FIG. 1, after receiving a multi-category multi-point sensing signal transmitted from a sensor, a BMS decision-making module in a battery self-management implementation system performs complex mathematical processing on a received sensing signal, converts the sensing signal into battery state information, performs SOX (State Of X, description of a battery state) estimation and decision-making on the battery state information, and then transmits a corresponding decision-making command to a functional system for execution after making a decision. Herein, the logic for implementing battery management shown in FIG. 1 has the following defects:

Since the BMS decision-making module in the battery self-management implementation system needs to perform complex mathematical processing on the received multi-category and multi-point sensing signal, the load of the BMS decision-making module in the battery self-management implementation system is excessively large, and it is difficult to process too many multi-category and multi-point sensing signals. Further, the battery self-management implementation system has very limited sensing points and cannot cover every battery in a battery group, which makes it impossible for the BMS decision-making module to accurately evaluate the state of each battery.

### Embodiment One

With reference to FIG. 2, FIG. 2 is a schematic flow chart of a method for implementing intelligent self-management of a battery group according to an embodiment of the disclosure. Herein, the method described in FIG. 2 is applied in a self-management implementation system. The self-management implementation system may at least include a cell parameter collection module and a data analyzing and processing module. Further, the cell parameter collection module is disposed inside each battery in the corresponding battery group. That is, each battery in the battery group is provided with the cell parameter collection module. Optionally, the self-management implementation system may be integrated in the battery group or is present independently of the battery group, which is not limited in the embodiments of the disclosure. As shown in FIG. 2, the method for implementing intelligent self-management of the battery group may include the following steps.

In 101, the cell parameter collection module collects a current state signal of a target battery corresponding to an arrangement position thereof and provides the current state signal to the data analyzing and processing module.

Herein, the cell parameter collection module may specifically include a sensor for collecting a state signal. The type of sensor included in the cell parameter collection module may be correspondingly set according to the type of actual state signal to be collected (e.g., electrochemical signal, temperature signal, pressure signal, air pressure signal, gas concentration signal, etc.). Further, the sensor included in the cell parameter collection module may be arranged at any position inside the battery and may be arranged correspondingly according to the actual collection requirements of the state signal, such as being arranged between half winding cores, between the winding cores and a battery casing, and so on, which is not limited in the embodiments of the disclosure.

Further, each battery in the battery group is also provided with a data transmission link. Further, the data transmission link is arranged correspondingly according to the layout position of the sensor in the cell parameter collection module, so as to ensure that the state signal of the battery can be transmitted to the data analyzing and processing module, and the transmission reliability of the state signal may thus be improved. Still further optionally, the data transmission link may be a wired transmission link or a wireless transmission link, which is not limited in the embodiments of the disclosure.

In 102, the data analyzing and processing module performs a data conversion operation on the current state signal after receiving the current state signal to obtain a current state value of the battery.

In 103, the data analyzing and processing module performs a matching self-management operation according to the current state value.

It thus can be seen that in the embodiments of the disclosure, the cell parameter collection module is disposed inside each battery in the corresponding battery group, and the state signal of each battery is collected through the cell parameter collection module in each battery. The collected state signal is provided to the data analyzing and processing module, so that the data analyzing and processing module can accurately judge the state of the battery according to the state signal collected by the cell parameter collection module disposed inside the battery and can further manage the battery in the battery group accurately. In this way, the accuracy of battery management is improved, and while the accuracy of battery management is improved, the efficiency of battery management can also be improved.

In an optional embodiment, the data analyzing and processing module performing the matching self-management operation according to the current state value may further include the following.

The data analyzing and processing module transmits the current state value to a decision-making module of the target battery to trigger the decision-making module to judge whether the current state value satisfies a predetermined first self-management triggering condition and sends a first self-management triggering command to a first functional module matching the first self-management triggering condition when a determination result is yes. The first self-management triggering command is configured to trigger the first functional module to perform a first management operation matched with the first self-management triggering command.

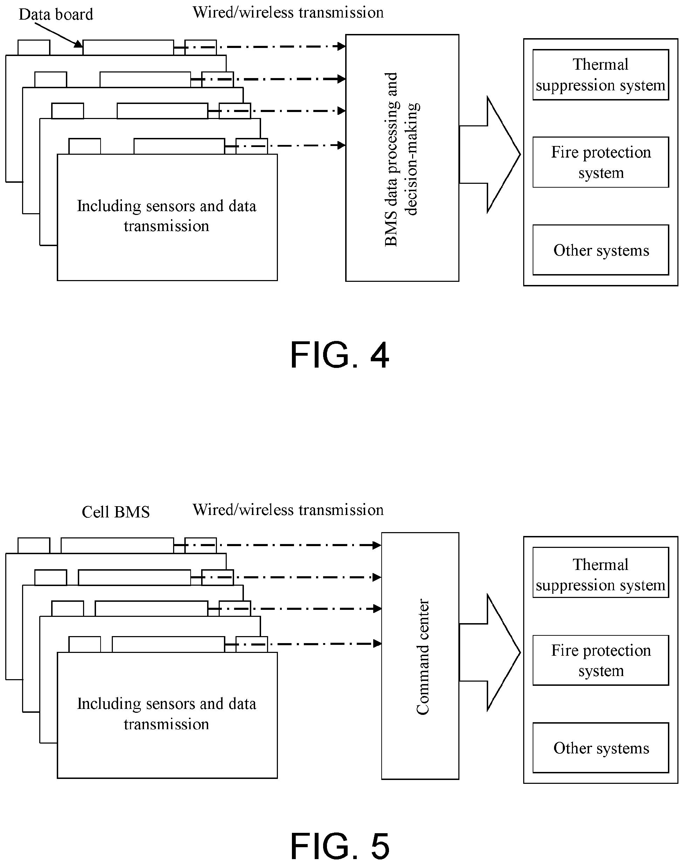

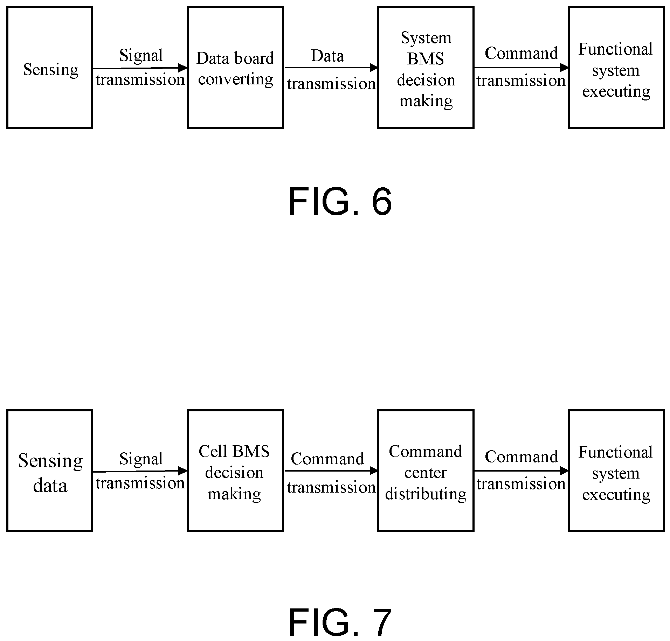

In this optional embodiment, the application architecture of the self-management implementation system corresponding to this optional embodiment is shown in FIG. 4. As shown in FIG. 4, the data analyzing and processing module may specifically be a data board arranged on a battery cover and may be arranged at any position on the battery casing according to needs, and its corresponding logic for implementing battery management is shown in FIG. 6. To be specific, through the data board arranged on the battery cover, the complex mathematical processing of the battery state signal may be completed on the battery, and battery parameter data (that is, a state value of the battery) may then be organized before transmission. On the one hand, the data processing capability of the cell is significantly enhanced, so that more sensors may be arranged inside the battery, and the state signals collected by the sensors arranged inside the battery are closer to the real state of the battery. On the other hand, the data board organizes the battery state signal into cell parameter data and then transmits it to the decision-making module (that is, a battery system BMS data processing and decision-making module) through the data transmission link between the data board and the decision-making module. Because the format of the data to be transmitted is uniform and the amount of data is small, the load on the data transmission link and battery system BMS data processing and decision-making module is significantly reduced.

Herein, in the application architecture shown in FIG. 4, the cell of the battery where the data board is located is a cell with self-sensing capability. Further, the first functional module that is required to perform the first management operation matching the first self-management triggering command may specifically be at least one functional module in at least one of a thermal suppression system, a fire protection system, and other systems. It should be noted that the thermal suppression system, the fire protection system, and other systems may be further refined into finer-grained meshes. In this way, fixed-point protection or treatment of a failed battery (or a failed cell in the battery) in a small region is implemented, and the accuracy of protection or treatment is improved.

In this optional embodiment, further, the data transmission between the data board and the decision-making module may be wireless transmission or wired transmission. Herein, in the case of wired transmission, an all-in-one data wiring method is preferred.

In this optional embodiment, still further optionally, after the data analyzing and processing module transmits the current state value to the decision-making module of the target battery to trigger the decision-making module to judge whether the current state value satisfies the predetermined first self-management triggering condition and sends the first self-management triggering command to the first functional module matching the first self-management triggering condition when the determination result is yes, the method further includes the following operations.

The data analyzing and processing module determines a real-time state value of the target battery according to a real-time state signal of the target battery provided by the cell parameter collection module and transmits the current state value to the decision-making module of the target battery, so as to trigger the decision-making module to judge whether a first operation result after the first functional module performs the first management operation satisfies a predetermined normal condition according to the real-time state value. If not, the decision-making module manages other functional modules with high self-management levels to perform matching management operations.

It should be noted that after the decision-making module judges that the first operation result after the first functional module performs the first management operation satisfies the predetermined normal condition and before the decision-making module manages other functional modules with high self-management levels to perform matching management operations, for other operations that can be performed by the decision-making module, reference may be made to the relevant intelligent processing operations performed by the data analyzing and processing module after judging that the management result after a second functional module performs a second management operation does not satisfy the predetermined normal condition in the optional embodiments (optional embodiments corresponding to the application architecture shown in FIG. 5) in the following paragraphs.

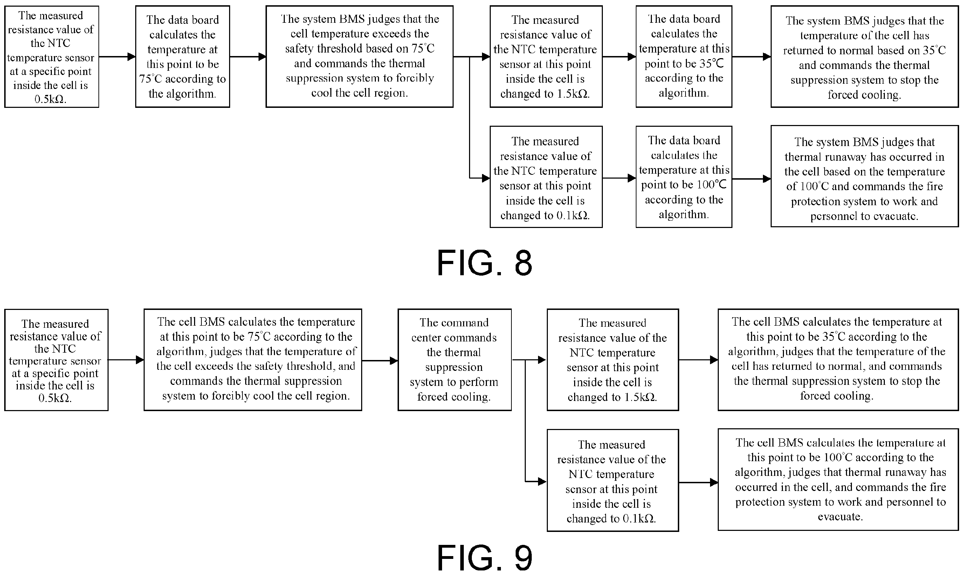

For instance, a self-management process corresponding to this optional embodiment is shown in FIG. 8. To be specific, when the data board receives an actual measured resistance value of a NTC temperature sensor at a specific collection point inside the battery is 0.5kQ, the data board calculates a battery temperature at the collection point as 75°C according to the algorithm and transmits it to the battery system BMS data processing and decision-making module. The battery system BMS data processing and decision-making module judges that the battery temperature exceeds a safe temperature threshold based on 75°C and then sends a management command to the thermal suppression system, so that the thermal suppression system performs a forced cooling operation on the battery. As such, when the data board receives the actual measured resistance value of the NTC temperature sensor at the specific collection point inside the battery is 1.5kΩ, the data board calculates the battery temperature at the collection point as 35°C according to the algorithm and transmits it to the battery system BMS data processing and decision-making module. The battery system BMS data processing and decision-making module judges that the battery temperature is returned to normal based on 35°C and then commands the thermal suppression system to stop the forced cooling operation of the battery. Alternatively, when the data board receives the actual measured resistance value of the NTC temperature sensor at the specific collection point inside the battery is 0.1kΩ, the data board calculates the battery temperature at the collection point as 100°C according to the algorithm and transmits it to the battery system BMS data processing and decision-making module. The battery system BMS data processing and decision-making module judges that thermal runaway occurs in the battery based on 100°C and then commands the fire protection system to work and relevant personnel to evacuate.

It thus can be seen that in this optional embodiment, after the self-management level is completed, intelligent judgment may be made on the operation result of the self-management operation. If the requirements are not met, a self-management operation with a high self-management level may be further performed, so that the reliability of the self-management operation based on the battery state signal is improved.

Further, under the logic for implementing battery management shown in FIG. 6, the corresponding self-management process of the battery is shown in FIG. 8. FIG. 8 is a schematic diagram of a management flow for implementing self-management based on the logic for implementation shown in FIG. 6 according to an embodiment of the disclosure.

In another optional embodiment, the data analyzing and processing module performing the matching self-management operation according to the current state value may further include the following.

The data analyzing and processing module judges whether the current state value satisfies a predetermined second self-management triggering condition and sends a second self-management triggering command to the second functional module matching the second self-management triggering condition. The second self-management triggering command is configured to trigger the second functional module to perform the second management operation matched with the second self-management triggering command.

Herein, the application architecture of the self-management implementation system corresponding to this optional embodiment is shown in FIG. 5. In the application architecture shown in FIG. 5, compared to the application architecture shown in FIG. 4, the data board is upgraded to a cell BMS, that is, the data analyzing and processing module may be specifically a cell BMS. The cell BMS mainly includes an original data board, a BMS board, and a BMS system, and its hardware structure still adopts the form of the data board. Herein, the cell BMS may be arranged on the battery cover and may be arranged at any position on the battery casing according to needs, and the logic for implementing battery management corresponding to the cell BMS is shown in FIG. 7. To be specific, in addition to processing cell sensing data (that is, the current state signal), the cell BMS may also perform operations such as the SOX estimation and safety state assessment. When a functional system is required to intervene, for example, when the temperature is excessively high and an alarm is required, the cell BMS can send a high temperature alarm command to a command center through wired or wireless means. The command center manages the functional modules in the corresponding functional system to perform high temperature alarm operations. That is, in the application architecture shown in FIG. 5, the battery cell where the cell BMS is located is a cell with decision-making capabilities, so real-time sensing, real-time analysis, and real-time decision-making are implemented, and the effects of low delay and high efficiency are achieved.

Further, the command center in FIG. 5 may be an independent component independent of the self-management implementation system, is specifically a command transceiver station, and receives a functional command from the cell BMS and transmits the functional command to the corresponding functional system. The corresponding operation is performed by the functional system that receives the functional command. That is, the command center receives and sends passively and does not make judgments related to logic, rationality, and necessity. It should be noted that the command center may also be integrated on the functional system.

Still further, the second functional module that is required to perform the second management operation matching the second self-management triggering command may specifically be at least one functional module in at least one of the thermal suppression system, the fire protection system, and other systems. It should be noted that the thermal suppression system, the fire protection system, and other systems may be further refined into finer-grained meshes. In this way, fixed-point protection or treatment of a failed battery (or a failed cell in the battery) in a small region is implemented, and the accuracy of protection or treatment is improved.

It thus can be seen that in this optional embodiment, real-time sensing, real-time analysis, and real-time decision-making are implemented, and the effects of low delay and high efficiency are achieved.

In this optional embodiment, further optionally, after the data analyzing and processing module sending the second self-management triggering command to the second functional module matching the second self-management triggering condition, the method may further include the following operation.

The data analyzing and processing module determines the real-time state value of the battery according to the real-time state signal of the battery provided by the cell parameter collection module and judges whether the management result after the second functional module performs the second management operation satisfies the predetermined normal condition according to the real-time state value.

The data analyzing and processing module sends a third self-management triggering command to a matching third functional module when it is judged that the management result does not satisfy the predetermined normal condition. The third self-management triggering command is configured to trigger the third functional module to perform a third management operation matched with the third self-management triggering command, and a self-management level of the third management operation is higher than a self-management level of the second management operation.

For instance, the self-management process corresponding to this optional embodiment is shown in FIG. 9. To be specific, when the cell BMS receives the actual measured resistance value of the NTC temperature sensor at a specific collection point inside the battery is 0.5kΩ, the cell BMS calculates that the battery temperature at the collection point is 75°C according to the algorithm and judges that the battery temperature exceeds the safe temperature threshold based on 75°C, and sends a management command to the thermal suppression system through the command center, so that the thermal suppression system performs a forced cooling operation on the battery. As such, when the cell BMS receives the actual measured resistance value of the NTC temperature sensor at the specific collection point inside the battery is 1.5kQ, the cell BMS calculates that the battery temperature at the collection point is 35°C according to the algorithm and judges that the battery temperature is returned to normal based on 35°C, and commands the thermal suppression system to stop the forced cooling operation on the battery through the command center. Alternatively, when the cell BMS receives the actual measured resistance value of the NTC temperature sensor at the specific collection point inside the battery is 0.1kΩ, the cell BMS calculates the battery temperature at the collection point as 100°C according to the algorithm and judges that thermal runaway occurs in the battery based on 100°C, and then commands the fire protection system to work through the command center and relevant personnel to evacuate.

It thus can be seen that in this optional embodiment, after the corresponding management operation is performed, the management result after the management operation is performed may also be intelligently judged. If it is judged that the management result after the management operation is performed still does not satisfy the predetermined normal condition, a higher level of self-management operation is further performed, and the self-management efficiency and effectiveness are improved.

In this optional embodiment, still further optionally, before the data analyzing and processing module sending the third self-management triggering command to the matching third functional module after it is judged that the management result does not satisfy the predetermined normal condition by, the method further includes the following operation.

The data analyzing and processing module determines a deviation trend of the real-time state value compared to a normal state value corresponding to the predetermined normal condition and judges whether the deviation trend is a negative deviation trend. Herein, the negative deviation trend is configured to indicate that a degree of deviation of the real-time state value compared to the normal state value is greater than a degree of deviation of the current state value compared to the normal state value.

When it is judged that the deviation trend is the negative deviation, the data analyzing and processing module performs the step of sending the third self-management triggering command to the matching third functional module.

It thus can be seen that in the optional embodiment, after it is judged that the management result of the execution of the management operation does not meet the predetermined normal condition and before a higher-level self-management operation is performed, the management trend of the management result obtained by executing the management operation is intelligently analyzed and judged. Further, when it is judged that the management trend is gradually developing towards a negative management trend, a higher-level of management operation is then further performed. In this way, unnecessary higher-level management operations are reduced, and that the reliability of performing higher-level management operations is improved.

In this optional embodiment, still further optionally, after the deviation trend is judged to be a negative deviation trend, the method may further include the following operation.

The data analyzing and processing module judges whether the degree of deviation of the real-time state value compared to the normal state value is greater than or equal to a predetermined degree threshold. When it is judged that the degree of deviation of the real-time state value compared to the normal state value is greater than or equal to the predetermined degree threshold, the step of sending the third self-management triggering command to the matching third functional module is triggered.

Herein, the degree of deviation includes a deviation amount and/or a deviation rate.

It thus can be seen that in this optional embodiment, after the management result of executing the management operation is judged not to meet the predetermined normal condition and the management trend is judged to be gradually developing towards a negative management trend, based on the scale of the negative deviation, it may be further determined whether a higher level of self-management operation needs to be performed. In this way, the reliability of executing a higher level self-management operation may be further improved.

### Embodiment Two

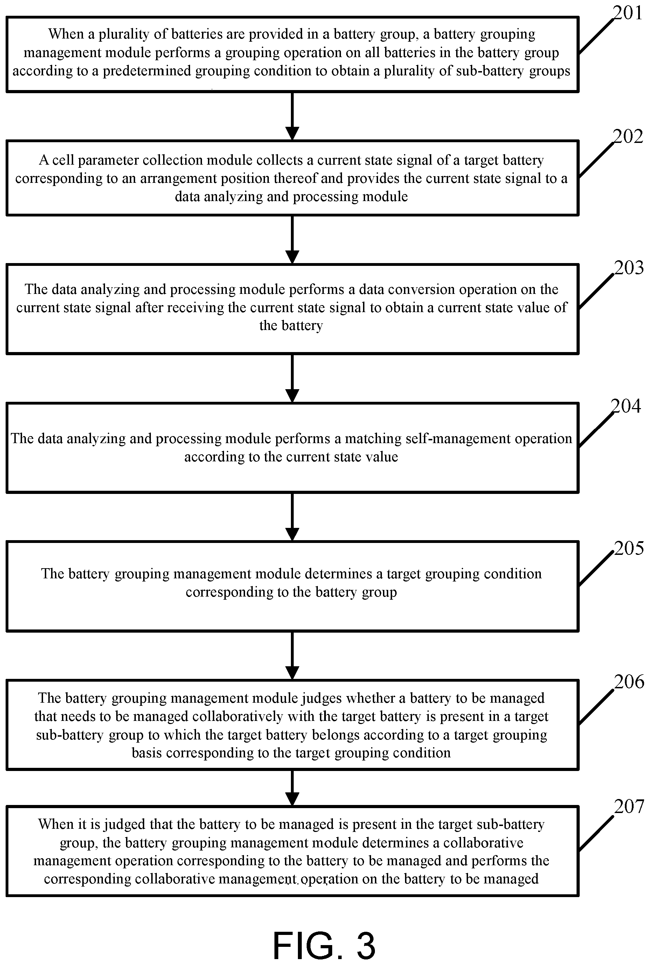

With reference to FIG. 3, FIG. 3 is a schematic flow chart of a method for implementing intelligent self-management of a battery group according to another embodiment of the disclosure. Herein, the method described in FIG. 3 is applied in a self-management implementation system. The self-management implementation system may at least include the cell parameter collection module, the data analyzing and processing module, and the battery grouping management module. Further, the cell parameter collection module is disposed inside each battery in the corresponding battery group. That is, each battery in the battery group is provided with the cell parameter collection module. Optionally, the self-management implementation system may be integrated in the battery group or is present independently of the battery group, which is not limited in the embodiments of the disclosure. As shown in FIG. 3, the method for implementing intelligent self-management of the battery group may include the following steps.

In 201, when a plurality of batteries are provided in the battery group, the battery grouping management module performs a grouping operation on all batteries in the battery group according to a predetermined grouping condition to obtain a plurality of sub-battery groups.

Herein, the grouping condition includes at least one of a first grouping condition based on a battery state value, a second grouping condition based on a battery position, and a third grouping condition based on a battery function. The number of batteries included in different sub-battery groups may be the same or different.

Optionally, when the grouping condition includes the first grouping condition, the different sub-battery groups are at least configured to implement a battery partition management operation in different application scenarios. For instance, in some low-power scenarios, only the batteries in part of the clusters are used to function, or the battery system is kept functioning normally while the battery is self-healing/reactivating, and the partition clusters may allow the battery system to be structured and modular and to provide plug-ins.

Optionally, when the grouping condition includes the second grouping condition, the different sub-battery groups are at least configured to implement a battery linkage management operation. Further, multi-level adjacent clusters (that is, multi-level sub-battery groups) may be defined according to the distance or relative position among batteries in the sub-battery group, and the linkage management among batteries in the group may be implemented. Further, each sub-battery group or cluster may correspond to the corresponding management level, so the targeted management of multi-level clusters may be implemented. For instance, multiple batteries with relatively close positions are defined as a sub-battery group or a cluster, when a battery in the sub-battery fails, the region can be shut down, especially in dangerous scenarios such as thermal runaway. In this way, the sub-battery group of the corresponding level may be shut down and protected according to the level of danger.

Optionally, when the grouping condition includes the third grouping condition, the different sub-battery groups are at least configured to implement a battery-specific management operation. In this way, some special functions may be implemented through the collaboration of the batteries in the sub-battery group, and even the alternate work between the batteries.

It should be noted that after the batteries in the battery group are subdivided into a plurality of sub-battery groups, adaptive management operations may be performed on different sub-battery groups, such as a start-up operation, a shutdown operation, a modification operation, etc., so that a replacement operation may be conveniently implemented on an abnormal battery.

In the embodiments of the disclosure, the collaborative management among batteries may be implemented through battery grouping, so that battery management efficiency and battery management accuracy may be improved. Herein, collaboration of battery clusters in a battery group is shown in FIG. 8, FIG. 8 is a schematic diagram of collaboration of battery clusters in a battery group according to an embodiment of the disclosure.

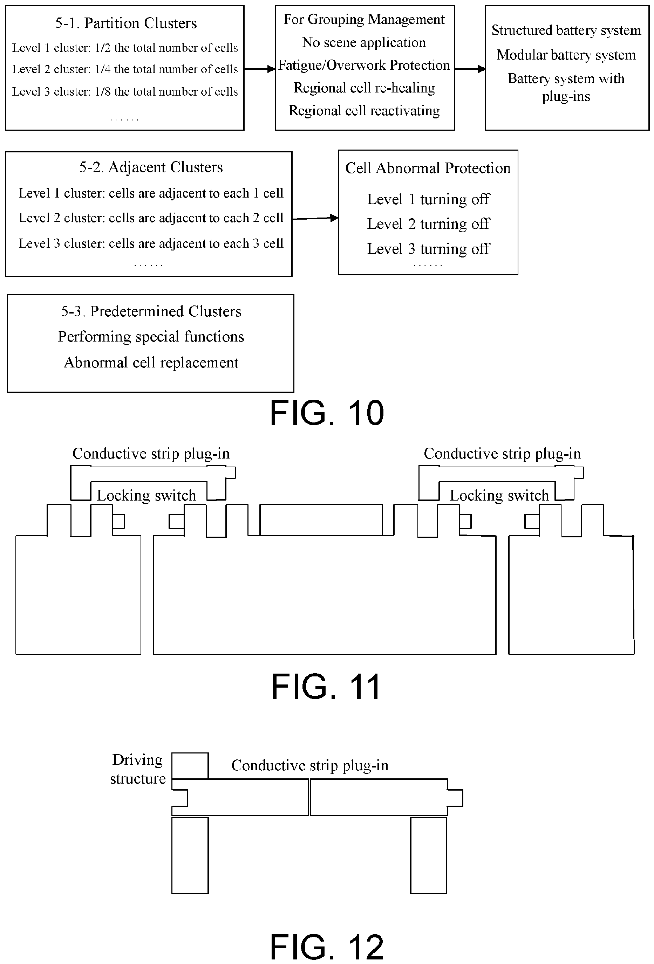

Optionally, the batteries in the same sub-battery group may implement collaborative management among the batteries in the group through conductive strips, and the conductive strips include manual movable conductive strips and/or self-propelled movable conductive strips. Herein, the conductive strips may be battery plug-ins. Further, corresponding sockets may be reserved on the battery cells for the conductive strips to be plugged in, and/or locking switches may be provided on the battery cells, which are used to lock and limit the conductive strips after the conductive strips are plugged in. Still further, the conductive strips may be extended or disconnected. Herein, the use of manually movable conductive strips can improve the flexibility of battery grouping, and the use of self-propelled movable conductive strips is beneficial to improve the efficiency of battery grouping. For instance, one of the structures of the manually movable conductive strips is shown in FIG. 9, FIG. 9 is a schematic structural diagram of a manually movable conductive strip according to an embodiment of the disclosure. Further, one of the structures of the self-propelled movable conductive strips is shown in FIG. 10, FIG. 10 is a schematic structural diagram of a self-propelled movable conductive strip according to an embodiment of the disclosure. As shown in FIG. 10, a driving structure is added to a conductive strip, and the joint design is carried out on the conductive strip so that it can move and turn, so that conductive strip may flexibly move.

In 202, the cell parameter collection module collects a current state signal of a target battery corresponding to an arrangement position thereof and provides the current state signal to the data analyzing and processing module.

In 203, the data analyzing and processing module performs a data conversion operation on the current state signal after receiving the current state signal to obtain a current state value of the battery.

In 204, the data analyzing and processing module performs a matching self-management operation according to the current state value.

It should be noted that, for other relevant detailed description of steps 202 to 204 in the embodiments of disclosure, relevant detailed description of steps 101 to 103 may be found with reference to Embodiment One, and details are not repeated in this embodiment of the disclosure.

In 205, the battery grouping management module determines a target grouping condition corresponding to the battery group.

In 206, the battery grouping management module judges whether a battery to be managed that needs to be managed collaboratively with the target battery is present in a target sub-battery group to which the target battery belongs according to a target grouping basis corresponding to the target grouping condition. When the judgment result of step 206 is yes, step 207 is triggered to proceed, and when the judgment result of step 206 is no, this process may end.

In 207, when it is judged that the battery to be managed is present in the target sub-battery group, the battery grouping management module determines a collaborative management operation corresponding to the battery to be managed and performs the corresponding collaborative management operation on the battery to be managed.

It should be noted that there is no strict execution order between step 204 and steps 205 to 207, step 204 may occur before or after any one of steps 205 to 207 and may also be performed simultaneously with any one of steps 205 to 207.

It thus can be seen that in the method provided by the embodiments of the disclosure, when a plurality of batteries are present in the battery group, the batteries in the battery group may be intelligently grouped according to the predetermined grouping condition. Further, when it is judged that the self-management operation needs to be performed according to the current state value of a battery, it may be further judged according to the grouping condition whether there are other batteries that need to be collaborative managed in the group where the battery is located. If yes is judged, the collaborative management operation may be further performed on other batteries requiring collaborative management, so that while the accuracy of battery management is improved, the efficiency and comprehensiveness of battery management may be further improved.

In an optional embodiment, the current state signal may include sensing data of at least one target type at at least one target position within the target battery. The collection position of the sensing data to be collected and the data type of the sensing data to be collected may be adaptively adjusted according to actual needs, so that the flexibility of sensing data collection inside the battery may be improved.

In another optional embodiment, a functional module matching a target self-management triggering condition includes a functional module matching the target self-management triggering condition among all the functional modules managed by an apparatus management center. The target self-management triggering condition is the first self-management triggering condition or the second self-management triggering condition. The apparatus management center is the apparatus management center of a target apparatus to which the battery group is applied. It thus can be seen that in the method for implementing intelligent self-management of the battery group, when it is judged that the self-management operation needs to be performed based on the current state value of the battery, the self-management operation may be implemented based on the functional module managed by the apparatus management center of the target apparatus (that is, the electric apparatus) to which the battery group is applied.

In still another optional embodiment, the target apparatus may include a vehicle. Further, the apparatus management center includes a vehicle command center for the vehicle, and all the functional modules managed by the apparatus management center include a functional module in the thermal suppression system of the vehicle and/or a functional module in the fire protection system of the vehicle.

It thus can be seen that in the optional embodiment, the self-management of the battery group and the vehicle to which the battery group is applied may also be combined, and the battery group in the vehicle may be judged based on the state value of the battery in the battery group. As such, when self-management is required, the functional modules managed by the vehicle-based apparatus management center implement the intelligent self-management operation of the battery. For instance, when the temperature of the vehicle battery is excessively high, the temperature of the battery is cooled through the vehicle's thermal suppression system.

### Embodiment Three

With reference to FIG. 11, FIG. 11 is a device for implementing intelligent self-management of a battery group according to an embodiment of the disclosure. The device is applied in the self-management implementation system, and the device at least includes a cell parameter collection module 301 and a data analyzing and processing module 302. Each battery in the battery group is provided with the cell parameter collection module.

The cell parameter collection module collects 301 is configured to collect the current state signal of the target battery corresponding to the arrangement position thereof and provides the current state signal to the data analyzing and processing module 302.

The data analyzing and processing module 302 is configured to perform the data conversion operation on the current state signal after receiving the current state signal to obtain the current state value of the target battery and perform the matching self-management operation according to the current state value.

Herein, the cell parameter collection module 301 may specifically include a sensor for collecting the state signal. The type of sensor included in the cell parameter collection module 301 may be correspondingly set according to the type of actual state signal to be collected. Further, the sensor included in the cell parameter collection module 301 may be arranged at any position inside the battery and may be arranged correspondingly according to the actual collection requirements of the state signal, such as being arranged between the half winding cores, between the winding cores and the battery casing, and so on, which is not limited in the embodiments of the disclosure.

It thus can be seen that in the device described in the embodiment of FIG. 11, the state signal of each battery may be collected through the cell parameter collection module in each battery. The collected state signal is provided to the data analyzing and processing module, so that the data analyzing and processing module can accurately judge the state of the battery according to the state signal collected by the cell parameter collection module disposed inside the battery and can further manage the battery in the battery group accurately. In this way, the accuracy of battery management is improved, and while the accuracy of battery management is improved, the efficiency of battery management can also be improved.

In an optional embodiment, the specific operation of the data analyzing and processing module 302 performing the matching self-management operation according to the current state value may further include the following.

The data analyzing and processing module 302 transmits the current state value to the decision-making module of the target battery to trigger the decision-making module to judge whether the current state value satisfies the predetermined first self-management triggering condition and sends the first self-management triggering command to the first functional module matching the first self-management triggering condition when the determination result is yes. The first self-management triggering command is configured to trigger the first functional module to perform the first management operation matched with the first self-management triggering command.

In this optional embodiment, the data analyzing and processing module 302 may specifically be the data board arranged on the battery cover and may be arranged at any position on the battery casing according to needs. It thus can be seen that in this optional embodiment, through the data board arranged on the battery cover, the complex mathematical processing of the battery state signal may be completed on the battery, and battery parameter data (that is, the state value of the battery) may then be organized before transmission. On the one hand, the data processing capability of the cell is significantly enhanced, so that more sensors may be arranged inside the battery, and the state signals collected by the sensors arranged inside the battery are closer to the real state of the battery. On the other hand, the data board organizes the battery state signal into cell parameter data and then transmits it to the decision-making module (that is, the battery system BMS data processing and decision-making module) through the data transmission link between the data board and the decision-making module. Because the format of the data to be transmitted is uniform and the amount of data is small, the load on the data transmission link and battery system BMS data processing and decision-making module is significantly reduced.

In this optional embodiment, further, the data transmission between the data board and the decision-making module may be wireless transmission or wired transmission. Herein, in the case of wired transmission, the all-in-one data wiring method is preferred.

In another optional embodiment, the specific operation of the data analyzing and processing module 302 performing the matching self-management operation according to the current state value may further include the following.

The data analyzing and processing module 302 judges whether the current state value satisfies the predetermined second self-management triggering condition and sends the second self-management triggering command to the second functional module matching the second self-management triggering condition. The second self-management triggering command is configured to trigger the second functional module to perform the second management operation matched with the second self-management triggering command.

In this optional embodiment, the data analyzing and processing module 302 may specifically be a cell BMS. The cell BMS mainly includes the original data board, the BMS board, and the BMS system, and its hardware structure still adopts the form of the data board. Herein, the cell BMS may be arranged on the battery cover and may be arranged at any position on the battery casing according to needs. In addition to processing cell sensing data (that is, the current state signal), the cell BMS may also perform operations such as the SOX estimation and safety state assessment. When the functional system is required to intervene, for example, when the temperature is excessively high and an alarm is required, the cell BMS can send a high temperature alarm command to the command center through wired or wireless means. The command center manages the functional modules in the corresponding functional system to perform high temperature alarm operations. Real-time sensing, real-time analysis, and real-time decision-making are implemented, and the effects of low delay and high efficiency are achieved.

In this optional embodiment, further optionally, the data analyzing and processing module 302 is further configured to determine the real-time state value of the battery according to the real-time state signal of the battery provided by the cell parameter collection module, judge whether the management result after the second functional module performs the second management operation satisfies the predetermined normal condition according to the real-time state value, and send the third self-management triggering command to the matching third functional module when it is judged that the management result does not satisfy the predetermined normal condition. The third self-management triggering command is configured to trigger the third functional module to perform the third management operation matched with the third self-management triggering command, and the self-management level of the third management operation is higher than the self-management level of the second management operation.

It thus can be seen that in this optional embodiment, after the corresponding management operation is performed, the management result after the management operation is performed may also be intelligently judged. If it is judged that the management result after the management operation is performed still does not satisfy the predetermined normal condition, a higher level of self-management operation is further performed, and the self-management efficiency and effectiveness are improved.

In this optional embodiment, still further optionally, the data analyzing and processing module 302, after judging that the management result does not satisfy the predetermined normal condition before sending the third self-management triggering command to the matching third functional module, is further configured to determine the deviation trend of the real-time state value compared to the normal state value corresponding to the predetermined normal condition and judge whether the deviation trend is a negative deviation trend. Herein, the negative deviation trend is configured to indicate that the degree of deviation of the real-time state value compared to the normal state value is greater than the degree of deviation of the current state value compared to the normal state value. Further, when it is judged that the deviation trend is the negative deviation, the data analyzing and processing module 302 performs the operation of sending the third self-management triggering command to the matching third functional module.

It thus can be seen that in the optional embodiment, after it is judged that the management result of the execution of the management operation does not meet the predetermined normal condition and before a higher-level self-management operation is performed, the management trend of the management result obtained by executing the management operation is intelligently analyzed and judged. Further, when it is judged that the management trend is gradually developing towards a negative management trend, a higher-level of management operation is then further performed. In this way, unnecessary higher-level management operations are reduced, and that the reliability of performing higher-level management operations is improved.

In this optional embodiment, still further optionally, the data analyzing and processing module 302, after judging that the deviation trend is the negative deviation trend, is further configured to judge whether the degree of deviation of the real-time state value compared to the normal state value is greater than or equal to the predetermined degree threshold. When it is judged that the degree of deviation of the real-time state value compared to the normal state value is greater than or equal to the predetermined degree threshold, the operation of sending the third self-management triggering command to the matching third functional module is triggered. Herein, the degree of deviation may include a deviation amount and/or a deviation rate.

It thus can be seen that in this optional embodiment, after the management result of executing the management operation is judged not to meet the predetermined normal condition and the management trend is judged to be gradually developing towards a negative management trend, based on the scale of the negative deviation, it may be further determined whether a higher level of self-management operation needs to be performed. In this way, the reliability of executing a higher level self-management operation may be further improved.

In still another optional embodiment, as shown in FIG. 12, the device further includes a battery grouping management module 303.

When a plurality of batteries are provided in the battery group, the battery grouping management module 303 is configured to perform a grouping operation on all batteries in the battery group according to a predetermined grouping condition to obtain a plurality of sub-battery groups.

Herein, the grouping condition includes at least one of the first grouping condition based on a battery state value, the second grouping condition based on a battery position, and the third grouping condition based on a battery function. Optionally, when the grouping condition includes the first grouping condition, the different sub-battery groups are at least configured to implement the battery partition management operation in different application scenarios. When the grouping condition includes the second grouping condition, the different sub-battery groups are at least configured to implement the battery linkage management operation. When the grouping condition includes the third grouping condition, the different sub-battery groups are at least configured to implement the battery-specific management operation. In the embodiments of the disclosure, the collaborative management among batteries may be implemented through battery grouping, so that battery management efficiency and battery management accuracy may be improved.

Optionally, the batteries in the same sub-battery group may implement collaborative management among the batteries in the group through conductive strips, and the conductive strips include manual movable conductive strips and/or self-propelled movable conductive strips. Herein, the conductive strips may be battery plug-ins. Further, corresponding sockets may be reserved on the battery cells for the conductive strips to be plugged in, and/or locking switches may be provided on the battery cells, which are used to lock and limit the conductive strips after the conductive strips are plugged in. Still further, the conductive strips may be extended or disconnected. Herein, the use of manually movable conductive strips can improve the flexibility of battery grouping, and the use of self-propelled movable conductive strips is beneficial to improve the efficiency of battery grouping.

In this optional embodiment, further optionally, The battery grouping management module 303 is further configured to determine a target grouping condition corresponding to the battery group and judge whether a battery to be managed that needs to be managed collaboratively with the target battery is present in a target sub-battery group to which the target battery belongs according to a target grouping basis corresponding to the target grouping condition. When it is judged that the battery to be managed is present in the target sub-battery group, the battery grouping management module 303 is further configured to determine a collaborative management operation corresponding to the battery to be managed and perform the corresponding collaborative management operation on the battery to be managed.

It thus can be seen that in the optional embodiment, when a plurality of batteries are present in the battery group, the batteries in the battery group may be intelligently grouped according to the predetermined grouping condition. Further, when it is judged that the self-management operation needs to be performed according to the current state value of a battery, it may be further judged according to the grouping condition whether there are other batteries that need to be collaborative managed in the group where the battery is located. If yes is judged, the collaborative management operation may be further performed on other batteries requiring collaborative management, so that while the accuracy of battery management is improved, the efficiency and comprehensiveness of battery management may be further improved.

Optionally, the current state signal may include the sensing data of at least one target type at at least one target position within the target battery. The collection position of the sensing data to be collected and the data type of the sensing data to be collected may be adaptively adjusted according to actual needs, so that the flexibility of sensing data collection inside the battery may be improved.

Optionally, the functional module matching the target self-management triggering condition includes the functional module matching the target self-management triggering condition among all the functional modules managed by the apparatus management center. The target self-management triggering condition is the first self-management triggering condition or the second self-management triggering condition. The apparatus management center is the apparatus management center of the target apparatus to which the battery group is applied. It thus can be seen that in this optional embodiment, when it is judged that the self-management operation needs to be performed based on the current state value of the battery, the self-management operation may be implemented based on the functional module managed by the apparatus management center of the target apparatus (that is, the electric apparatus) to which the battery group is applied.

Further optionally, the target apparatus may include a vehicle. The apparatus management center includes the vehicle command center for the vehicle, and all the functional modules managed by the apparatus management center include the functional module in the thermal suppression system of the vehicle and/or the functional module in the fire protection system of the vehicle.

It thus can be seen that in the optional embodiment, the self-management of the battery group and the vehicle to which the battery group is applied may also be combined, and the battery group in the vehicle may be judged based on the state value of the battery in the battery group. As such, when self-management is required, the functional modules managed by the vehicle-based apparatus management center implement the intelligent self-management operation of the battery. For instance, when the temperature of the vehicle battery is excessively high, the temperature of the battery is cooled through the vehicle's thermal suppression system.

### Embodiment Four

The embodiments of the disclosure provide a battery group including a plurality of batteries. Each battery in the battery group is provided with the cell parameter collection module, and the battery group is configured to perform part or all of the steps in the method for implementing intelligent self-management of the battery group according to any one of claims 1 to 9.

The device embodiments described above are only illustrative. The modules described as separate components may or may not be physically separated, and the components displayed as modules may or may not be physical modules, that is, they may be located in one place, or they may be distributed on multiple network modules. Some of or all of the modules may be selected according to actual needs to achieve the objectives of the solutions of the embodiments. It can be understood and implemented by a person having ordinary skill in the art without any creative efforts.

Through the specific description of the above embodiments, a person having ordinary skill in the art can clearly understand that each embodiment can be implemented by means of software plus a necessary general-purpose hardware platform, and certainly also by hardware. Based on this understanding, regarding the above technical solution, the part that contributes to the related art may be embodied in the form of a software product in essence. The computer software product may be stored on a computer readable storage medium. The storage medium includes a read-only memory (ROM), a random access memory (RAM), a programmable read-only memory (PROM), an erasable programmable read only memory (EPROM), an one-time programmable read-only memory (OTPROM), an electrically-erasable programmable read-only memory (EEPROM), a compact disc read-only memory (CD-ROM), an optical disc memory, a magnetic disk storage, a magnetic tape storage, or any other computer-readable medium that can be used to carry or store data.

Finally, it is worth noting that in the method and device for implementing intelligent self-management of the battery group and the battery group, the foregoing embodiments are merely described to illustrate the technical means of the disclosure and should not be construed as limitations of the disclosure. Even though the foregoing embodiments are referenced to provide detailed description of the disclosure, people having ordinary skill in the art should understand that various modifications and variations can be made to the technical means in the disclosed embodiments, or equivalent replacements may be made for part of the technical features; nevertheless, it is intended that the modifications, variations, and replacements shall not make the nature of the technical means to depart from the spirit and scope of the technical means of the embodiments of the disclosure.

## Claims

1. A method for implementing intelligent self-management of a battery group applied in a self-management implementation system, wherein the self-management implementation system at least comprises a cell parameter collection module (301) and a data analyzing and processing module (302), each battery in the battery group is provided with the cell parameter collection module (301), and the method comprises:
collecting a current state signal of a target battery corresponding to an arrangement position thereof and providing the current state signal to the data analyzing and processing module (302) by the cell parameter collection module (301) (101, 202); and
performing a data conversion operation on the current state signal after receiving the current state signal to obtain a current state value of the target battery (102, 203) and performing a matching self-management operation according to the current state value by the data analyzing and processing module (302) (103, 204).

2. The method for implementing intelligent self-management of the battery group according to claim 1, wherein the performing the matching self-management operation according to the current state value by the data analyzing and processing module (302) (103, 204) comprises:
transmitting, by the data analyzing and processing module (302), the current state value to a decision-making module of the target battery to trigger the decision-making module to judge whether the current state value satisfies a predetermined first self-management triggering condition and sending a first self-management triggering command to a first functional module matching the first self-management triggering condition when a determination result is yes, wherein the first self-management triggering command is configured to trigger the first functional module to perform a first management operation matched with the first self-management triggering command; or
judging whether the current state value satisfies a predetermined second self-management triggering condition and sending a second self-management triggering command to a second functional module matching the second self-management triggering condition through a command center by the data analyzing and processing module (302), wherein the second self-management triggering command is configured to trigger the second functional module to perform a second management operation matched with the second self-management triggering command.

3. The method for implementing intelligent self-management of the battery group according to claim 2, wherein after the sending the second self-management triggering command to the second functional module matching the second self-management triggering condition through the command center by the data analyzing and processing module (302), the method further comprises:
determining a real-time state value of the target battery according to a real-time state signal of the target battery provided by the cell parameter collection module (301) and judging whether a management result after the second functional module performs the second management operation satisfies a predetermined normal condition according to the real-time state value by the data analyzing and processing module (302);
sending a third self-management triggering command through the command center to a matching third functional module when it is judged that the management result does not satisfy the predetermined normal condition by the data analyzing and processing module (302), wherein the third self-management triggering command is configured to trigger the third functional module to perform a third management operation matched with the third self-management triggering command, and a self-management level of the third management operation is higher than a self-management level of the second management operation,
wherein before the sending the third self-management triggering command through the command center to the matching third functional module after it is judged that the management result does not satisfy the predetermined normal condition by the data analyzing and processing module (302), the method further comprises:
determining a deviation trend of the real-time state value compared to a normal state value corresponding to the predetermined normal condition and judging whether the deviation trend is a negative deviation trend by the data analyzing and processing module (302), wherein the negative deviation trend is configured to indicate that a degree of deviation of the real-time state value compared to the normal state value is greater than a degree of deviation of the current state value compared to the normal state value;
performing, by the data analyzing and processing module (302), the step of sending the third self-management triggering command through the command center to the matching third functional module when it is judged that the deviation trend is the negative deviation.

4. The method for implementing intelligent self-management of the battery group according to claim 3, wherein after judging that the deviation trend is the negative deviation trend, the method further comprises:
judging whether the degree of deviation of the real-time state value compared to the normal state value is greater than or equal to a predetermined degree threshold by the data analyzing and processing module (302); and triggering the step of sending the third self-management triggering command through the command center to the matching third functional module when it is judged that the degree of deviation of the real-time state value compared to the normal state value is greater than or equal to the predetermined degree threshold, wherein the degree of deviation comprises a deviation amount and/or a deviation rate.

5. The method for implementing intelligent self-management of the battery group according to claim 2, wherein the self-management implementation system further comprises a battery grouping management module,
wherein the method further comprises:
performing, by the battery grouping management module, a grouping operation on all batteries in the battery group according to a predetermined grouping condition to obtain a plurality of sub-battery groups when a plurality of batteries are provided in the battery group (201), the grouping condition comprises at least one of a first grouping condition based on a battery state value, a second grouping condition based on a battery position, and a third grouping condition based on a battery function,
wherein when the grouping condition comprises the first grouping condition, the different sub-battery groups are at least configured to implement a battery partition management operation in different application scenarios, when the grouping condition comprises the second grouping condition, the different sub-battery groups are at least configured to implement a battery linkage management operation, and when the grouping condition comprises the third grouping condition, the different sub-battery groups are at least configured to implement a battery-specific management operation.

6. The method for implementing intelligent self-management of the battery group according to claim 5, further comprising:
determining a target grouping condition corresponding to the battery group (205) and judging whether a battery to be managed that needs to be managed collaboratively with the target battery is present in a target sub-battery group to which the target battery belongs according to a target grouping basis corresponding to the target grouping condition by the battery grouping management module (206); and determining a collaborative management operation corresponding to the battery to be managed when it is judged that the battery to be managed is present in the target sub-battery group and performing the corresponding collaborative management operation on the battery to be managed (207).

7. The method for implementing intelligent self-management of the battery group according to claim 6, wherein the batteries in the same sub-battery group implement collaborative management among the batteries in the group through conductive strips, and the conductive strips comprise a manual movable conductive strip and/or a self-propelled movable conductive strip.

8. The method for implementing intelligent self-management of the battery group according to claim 2, wherein the current state signal comprises sensing data of at least one target type at at least one target position within the target battery,
a functional module matching a target self-management triggering condition comprises a functional module matching the target self-management triggering condition among all the functional modules managed by an apparatus management center, the target self-management triggering condition is the first self-management triggering condition or the second self-management triggering condition, and the apparatus management center is the apparatus management center of a target apparatus to which the battery group is applied.

9. The method for implementing intelligent self-management of the battery group according to claim 8, wherein the target apparatus comprises a vehicle, the apparatus management center comprises a vehicle command center for the vehicle, and all the functional modules managed by the apparatus management center comprise a functional module in a thermal suppression system of the vehicle and/or a functional module in a fire protection system of the vehicle.

10. A device for implementing intelligent self-management of a battery group applied in a self-management implementation system, wherein the self-management implementation system at least comprises a cell parameter collection module (301) and a data analyzing and processing module (302), and each battery in the battery group is provided with the cell parameter collection module (301),
wherein the self-management implementation system is configured to perform the method for implementing intelligent self-management of the battery group according to claim 1.

11. A battery group comprising a plurality of batteries, wherein each battery in the battery group is provided with a cell parameter collection module (301), and the battery group is configured to perform the method for implementing intelligent self-management of the battery group according to claim 1.
